Europäisches Patentamt

European Patent Office

Office européen des brevets

(19)

(11) Numéro de publication: **0 332 486**
A1

# (12) DEMANDE DE BREVET EUROPEEN

(21) Numéro de dépôt: **89400446.4**

(22) Date de dépôt: **17.02.89**

(51) Int. Cl.⁴: **H 04 N 3/15**
H 05 G 1/60, H 04 N 5/32

(30) Priorité: **26.02.88 FR 8802361**

(43) Date de publication de la demande:
**13.09.89 Bulletin 89/37**

(84) Etats contractants désignés: **DE FR GB NL**

(71) Demandeur: **THOMSON-CSF**
**51, Esplanade du Général de Gaulle**
**F-92800 Puteaux (FR)**

(72) Inventeur: **Arques, Marc THOMSON-CSF SCPI**
**51, Esplanade du Général de Gaulle**
**F-92045 Paris la Défense (FR)**

(74) Mandataire: **Guérin, Michel et al**
**THOMSON-CSF SCPI**
**F-92045 PARIS LA DEFENSE CEDEX 67 (FR)**

(54) **Matrice d'éléments photosensibles et détecteur de radiations comportant une telle matrice, notamment détecteur de rayons X à double énergie.**

(57) L'invention se rapporte à l'élaboration d'images notamment radiologiques, au moyen d'une matrice photosensible (1) permettant l'acquisition simultanée de plusieurs images.

La matrice (1) de l'invention comporte un réseau de conducteurs en ligne (L1 à L3) et un réseau de conducteurs en colonne (F1 à F3). Des points photosensibles (P1 à P9) sont formés à chaque croisement d'un conducteur ligne (L1 à L3) avec un conducteur colonne (F1 à F3) ; chaque point photosensible ayant une extrémité (10) reliée au conducteur ligne et l'autre extrémité (11) connectée au conducteur colonne. Selon une caractéristique de l'invention, chaque point photosensible (P1 à P9) est constitué par deux éléments photosensibles (DA, DB) et une capacité (CI) tous montés en série, les deux éléments photosensibles (DA, DB) ayant des sens de conduction opposés. Par suite, chaque point photosensible (P1 à P9) peut comporter deux zones (A, B) à potentiel flottant permettant d'engendrer et de stocker deux quantités de charge, dont l'une est proportionnelle à l'éclairement de l'un des éléments photosensibles (DA, DB) et dont l'autre est proportionnelle à l'éclairement de l'autre élément.

FIG_1

Description

## MATRICE D'ELEMENTS PHOTOSENSIBLES ET DETECTEUR DE RADIATIONS COMPORTANT

L'invention se rapporte à l'élaboration d'images au moyen de matrices d'éléments photosensibles, et concerne plus particulièrement un arrangement matriciel d'éléments photosensibles permettant l'acquisition simultanée de plusieurs images. L'invention concerne également un détecteur de radiations utilisant un tel arrangement d'éléments photosensibles, notamment un détecteur de rayons X permettant d'élaborer simultanément deux images correspondant chacune à un spectre en énergie différent du rayonnement X.

En prenant pour exemple le domaine de la radiologie et du radiodiagnostic, il est intéressant de réaliser lors de l'examen d'un patient, deux clichés correspondant chacun à une énergie différente du rayonnement X, de manière à obtenir les renseignements spécifiques de certains corps, par différentiation des clichés.

Les images de ce type ou images bi-énergie, réalisées actuellement par les radiologues, sont obtenues à partir de deux images d'une même zone du patient formées successsivement, soit en modifiant d'une image à l'autre les conditions du rayonnement X (spectre en énergie du rayonnement X différent); soit en utilisant des capteurs sensibles à des fenêtres énergétiques différentes du rayonnement X , ceci étant obtenu par exemple en changeant le type de scintillateur servant à convertir les rayons X en une lumière visible qui impressionne un film photographique (le scintillateur est une substance qui a la propriété d'être excitée par des rayons X et d'émettre, en réponse à cette excitation, un rayonnement de longueur d'onde visible ou proche du visible ; le scintillateur a un rendement de conversion maximum, ou sensibilité maximale, dans une certaine gamme d'énergie du rayonnement X, cette gamme d'énergie étant déterminée par la nature de la subtance qui constitue le scintillateur).

Ces méthodes de l'art antérieur présentent l'inconvénient d'exiger des mouvements mécaniques notamment du film ou du capteur pour la prise de deux clichés successifs, et l'un des inconvénients majeurs réside en ce que ces images obtenues successivement ne permettent pas de s'affranchir des mouvements du patient : il en résulte une médiocre superposabilité des deux clichés et par suite une médiocre résolution spatiale.

Un des buts de l'invention est de permettre l'élaboration de deux images simultanées dites images bi-énergie d'une même zone examinée, correspondant chacune à un spectre en énergie différent du rayonnement X, de sorte à permettre une parfaite superposabilité des clichés. Ceci est obtenu à l'aide d'un capteur surfacique du type conmportant une matrice d'éléments photosensibles, donc ne nécessitant pas de mouvement mécanique pendant la prise d'images et fournissant à partir d'une seule irradiation x d'un objet ou patient, les deux images ci-dessus mentionnées.

Pour réaliser des matrices d'éléments photosensibles, il est classique de prévoir un réseau de conducteurs en ligne et un réseau de conducteurs en colonne,et à chaque croisement d'une ligne et d'une colonne, est constitué un point photosensible. Le nombre de points photosensibles dans une surface donnée détermine la résolution de l'image. Chaque point photosensible est connecté entre un conducteur ligne et un conducteur colonne. En fait, à chaque conducteur ligne est connecté autant de points photosensibles qu'il y a de colonne de ces derniers, et à chaque conducteur de colonne est connecté autant de points photosensibles qu'il y a de lignes de ces derniers.

Pour réduire l'encombrement d'un point photosensible, c'est-à-dire en fait pour augmenter la résolution en logeant un plus grand nombre de points photosensibles dans une surface donnée, on a proposé des matrices d'éléments photosensibles dans lesquelles chaque point photosensible est constitué par une photodiode en série avec une capacité ; la capacité servant, d'une part, à stocker les charges engendrées par un éclairement de la photodiode,et servant d'autre part à isoler la photodiode du conducteur de colonne lorsque la ligne correspondant à cette photodiode n'est pas sélectionnée, lors de la lecture du point photosensible. Le brevet français n° 86 00656 publié sous le n° 2 593 319 décrit un procédé de lecture et le fonctionnement détaillé d'une matrice d'éléments photosensible où chaque point photosensible est constitué par une photodiode et une capacité en série, entre un conducteur de ligne et un conducteur de colonne

Un autre brevet français n° 86 00716 publié sous le n° 2 593 343 décrit un procédé de fabrication d'une matrice de points photosensibles tels que ci-dessus expliqué ainsi qu'un procédé de lecture et une application de cette matrice à la prise de vue d'images notamment radiologiques. Un des avantages de ce type de structure est de permettre la réalisation de matrices de grandes dimensions, du fait que les dépôts en couche mince, de silicium amorphe par exemple, sont maintenant bien maitrisés.

Pour obtenir des images bi-énergie à l'aide d'une matrice d'éléments photosensibles telle que représentées aux figures 5a, 5b, 6a et 6b du brevet français 86 00716 ci-dessus cité, il suffit d'ajouter un second scintillateur au premier scintillateur repéré 9 sur ces figures, en intercalant ce second scintiallateur entre le substrat repéré 1 sur ces figures et le premier niveau de conducteurs repéré 2 ; chaque scintillateur ayant une sensibilité optimale pour des rayons X d'énergie différente. Bien entendu, il est nécessaire en outre d'introduire dans cette structure deux niveaux supplémentaires en damier "opaque-transparent", disposés entre les scintillateurs et les photodiodes, de façon que certains points photosensibles ne voient que la lumière provenant de l'un des scintillateurs et que les autres points photosensibles ne voient que la lumière provenant de l'autre scintillateur.

Cette solution, relativement simple à réaliser technologiquement, présente cependant l'inconvénient de fournir deux images bi-énergie, présentant séparément une résolution et un facteur de remplissage moitié par rapport aux images mono énergie, du fait que sur deux points photosensibles adjacents, l'un est concerné par la première image et l'autre par la seconde image.

Aussi, un autre but de l'invention est de permettre la réalisation de détecteurs photosensibles, de type linéaire ou matriciel, dont chaque point photosensible est capable de stocker deux informations différentes, permettant ainsi d'obtenir avec notamment un détecteur d'image radiologique, deux images correspondant chacune à une énergie différente du rayonnement X et présentant chacune une résolution et un facteur de remplissage équivalant aux images mono énergie.

Selon l'invention, une matrice d'éléments photosensibles comportant un réseau de conducteurs en ligne et un réseau de conducteurs en colonne, un réseau de points photosensible, est caractérisée en ce que chaque point photosensible comporte, entre un conducteur de ligne et un conducteur de colonne, deux éléments photosensibles montés en série avec une capacité, les deux éléments photosensibles étant montés tête-bêche.

L'invention sera mieux comprise et d'autres caractéristiques et résultats de l'invention ressortiront de la description suivante, donnée à titre d'exemple non limitatif, et illustrée par les cinq figures annexées, parmi lesquelles :
    - la figure 1 est un schéma montrant, à titre d'exemple non limitatif, une matrice d'éléments photosensibles conforme à l'invention ;
    - la figure 2 est le schéma électrique équivalent d'un point photosensible montré sur la figure 1 ;
    - les figures 3a, 3b, ..., 3f représentent des signaux explicatifs du fonctionnement d'une matrice selon l'invention ;
    - la figure 4 est le schéma d'un point photosensible selon une variante de l'invention ;
    - les figures 5a et 5b sont des coupes latérales selon deux directions orthogonales d'un dispositif détecteur d'images utilisant la matrice montrée à la figure 1.

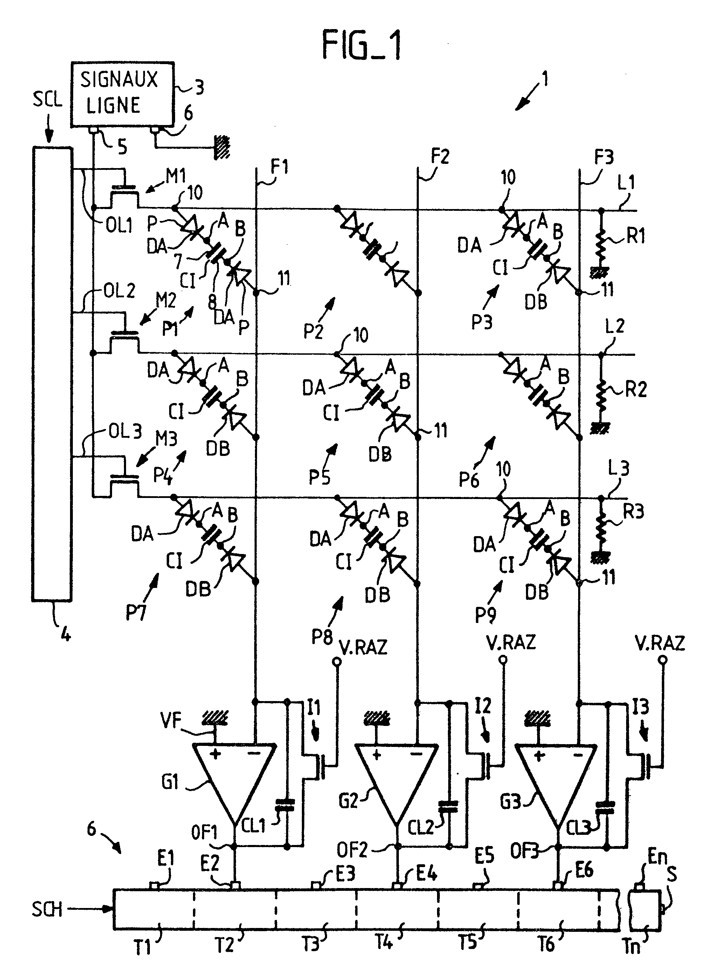

La figure 1 montre une matrice 1 photosensible conforme à l'invention. La matrice 1 comporte un réseau de conducteurs en ligne L1, L2, L3 et un réseau de conducteurs en colonne F1, F2, F3; dans l'exemple non limitatif décrit, ces deux types de conducteurs sont chacun limité à 3, pour simplifier la figure 1. La matrice 1 comporte un réseau de points photosensibles P1, P2,..., P9 également organisés en lignes et en colonnes, et qui sont disposés au croisement des conducteurs en ligne L1 à L3 et des conducteurs en colonne F1 à F3 ; chaque point sensible P1 à P9 ayant une extrémité 10 connectée à un conducteur ligne L1 à L3, et une seconde extrémité 11 connectée à un conducteur de colonne F1 à F3.

Selon une caractéristique de l'invention les points photosensibles P1, P2,...,P9 sont constitués chacun par un premier et un second éléments photosensibles DA, DB disposés en série avec une capacité Cl, les deux éléments photosensibles DA, DB étant disposés tête-bêche c'est-à-dire qu'ils ont des sens de conduction inversés.

Dans l'exemple non limitatif de la description, les éléments photosensibles DA, DB sont constitués par des photodiodes, et la capacité Cl est disposée entre les deux photodiodes.

Il est à noter également que ce sont les anodes ou zones p des photodiodes DA, DB qui sont reliées aux conducteurs lignes L1 à L3 et aux conducteurs colonnes F1 à F3, et les cathodes ou zones n de ces photodiodes qui sont reliées à la capacité Cl, mais dans l'esprit de l'invention le sens des diodes photosensibles pourraient aussi bien être inversées.

Il est ainsi possible avec chacun des points photosensibles P1 à P9 de stocker deux informations différentes, de sorte par exemple à réaliser deux images radiologiques correspondant chacune à une énergie différente du rayonnement X. Ceci peut être obtenu en convertissant le rayonnement X en lumière visible et en exposant chaque photodiode DA, DB à la lumière ayant l'origine désirée, ce qui permet d'une part, dans une zone A située entre une première armature 7 de la capacité Cl et la cathode de la première photodiode DA, et formant un premier point à potentiel flottant, de stocker une première information ou quantité de charge QA liée à l'éclairement de la première photodiode DA ; et d'autre part, dans une seconde zone B, formant un second point à potentiel flottant situé entre la seconde armature 8 de la capacité Cl et la cathode de la seconde photodiode DB, de stocker une seconde information ou quantité de charge QB liée à l'éclairement de la seconde photodiode DB.

Au niveau d'une zone de stockage A ou B, les informations ou charges QA ou QB sont engendrées et stockées quant la photodiode DA ou DB est polarisée en inverse, suivant un fonctionnement semblable à celui qui est expliqué pour une cellule à une photodiode et une capacité dans les demandes de brevets français n° 86 000656 et 86 00716 déjà citées.

La lecture des zones de stockage A, B est ensuite effectuée par une remise en polarisation directe des photodiodes A, B.

Ces opérations sont effectuées en appliquant à chaque point photosensible P1,...P9 une tension ligne VL sous forme d'impulsions de polarités et d'amplitude appropriées, appelées signaux lignes SL et produites par un générateur d'impulsions 3.

Dans l'exemple non limitatif décrit les conducteurs lignes L1 à L3 sont reliés à une borne de sortie 5 du générateur d'impulsions 3 par l'intermédiaire de transistors MOS M1, M2, M3 formant des interrupteurs de lignes commandés par les sorties OL1, OL2, OL3 d'un registre à décalage 4 dit registre lignes. Ce registre est commandé par un signal de commande SCL de décalage ligne. Ainsi lorsqu'une ligne de points

3

photosensibles P1 à P3 ou P4 à P6 ou P7 à P9 est sélectionnée, le conducteur ligne L1 à L3 correspondant est relié au généraleur d'impulsions 3, de sorte que les signaux lignes sont appliqués à tous les points photosensibles reliés à ce conducteur ligne. Il est à noter que pour maintenir les conducteurs lignes L1 à L3 à un potentiel fixe, quand les interrupteurs de ligne M1, M2, M3 sont ouverts (non passants), chaque conducteur ligne L1, L2, L3 est relié à la masse par une résistance R1, R2, R3 ; ces résistances R1 à R3 ayant une valeur élevée par rapport à la résistance présentée par les interrupteurs lignes M1 à M3 quand ces derniers sont fermés (état passant).

Dans l'exemple non limitatif de la description, chaque conducteur colonne F1 à F3 est relié à l'entrée négative "-" d'un amplificateur opérationel G1 à G3, monté en intégrateur à l'aide d'un condensateur d'intégration CL1 à CL3. Le condensateur d'intégration CL1 à CL3 est monté entre l'entrée négative "-" de l'amplificateur G1 à G3 et la sortie OF1, OF2, OF3 de ce dernier. La seconde entrée ou entrée positive " + " de chaque amplificateur G1 à G3 est reliée à un potentiel de référence colonne VF qui, dans l'exemple non limitatif décrit est la masse.

Chaque amplificateur intégrateur G1 à G3 comporte en outre un interrupteur de RAZ I1 à I3 monté en parallèle avec le condensateur d'intégration CL1 à CL3.

L'interrupteur de RAZ I1 à I3 d'un amplificateur intégrateur G1 à G3 donné, est maintenu fermé de manière à court-circuiter le condensateur d'intégration CL1 à CL3, sauf pendant la séquence de lecture des zones A, B d'un point photosensible qui est relié à cet amplificateur.

Dans l'exemple non limitatif décrit, les interrupteurs I1 à I3 sont constitués par des transistors MOS commandés par des signaux de remise à zéro V-RAZ.

Ainsi au repos : les conducteurs colonnes F1 à F3 sont au potentiel zéro volt ou masse ; il en est de même pour les conducteurs lignes L1 à L3, la tension VL des signaux lignes étant référencée par rapport à la masse, la seconde borne 6 du générateur 3 est reliée à la masse.

Les sorties OF1, OF2, OF3 des amplificateurs intégrateurs G1, G2, G3 sont reliées à des moyens de lecture et de multiplexage comportant un dispositif d'acquisition de données analogiques 6, constitué par exemple par un registre à décalage à n étages d'acquisition T1, T2, ...Tn à entrées parallèles E1, E2,...,En et sortie S série, du type C.C.D par exemple.

Dans l'exemple non limitatif décrit, en vue d'éviter une superposition dans un même étage d'acquisition des signaux correspondants aux deux charges Q1, Q2 (précédemment mentionnées) délivrées successivement par chaque point photosensible P1 à P9, deux étages d'acquisition adjacents sont destinés a être chargés sucessivement par une même sortie OF1, OF2, OF3 d'amplificateur G1, G2, G3.

A cette fin, les sorties OF1, OF2, OF3 sont reliées par exemple respectivement aux seconde, quatrième et sixième entrées E2, E4, E6 de sorte à charger dans un premier temps les étages d'acquisition correspondants T2, T4, T6, puis à charger dans un second temps les étages d'acquisition T1, T3, T5, après avoir opéré un décalage des étages à l'aide d'un signal de décalage horizontal SCH appliqué à l'entrée de commande 10 du dispositif d'acquisition 6.

La polarisation en inverse des photodiodes DA, DB peut être réalisée soit, pour tous les points photosensibles P1 à P9 simultanément en rendant passant tous les interrupteurs lignes M1, M2, M3, soit uniquement pour les points photosensibles reliés à un même conducteur ligne : par exemple les premier, second et troisième points photosensibles P1, P2, P3 si c'est le premier interrupteur ligne M1 qui est rendu conducteur.

La lecture d'un point photosensible P1 à P9 peut s'effectuer à la double condition que, le conducteur ligne L1 à L3 auquel il est relié soit connecté au générateur d'impulsion 3 (interrupteur ligne M1 à M3 correspondant étant à l'état passant), et que le condensateur d'intégration CL1 à CL3, auquel il est relié par un conducteur colonne, ne soit pas court-circuité (interrupteur de R.A.Z. correspondant étant à l'état bloqué ou ouvert).

Ainsi par exemple, la lecture simultanée des trois premiers points photosensibles P1, P2, P3 est possible, si le premier interrupteur ligne M1 est passant et si les trois interrupeurs de R.A.Z. I1, I2, I3 sont ouverts.

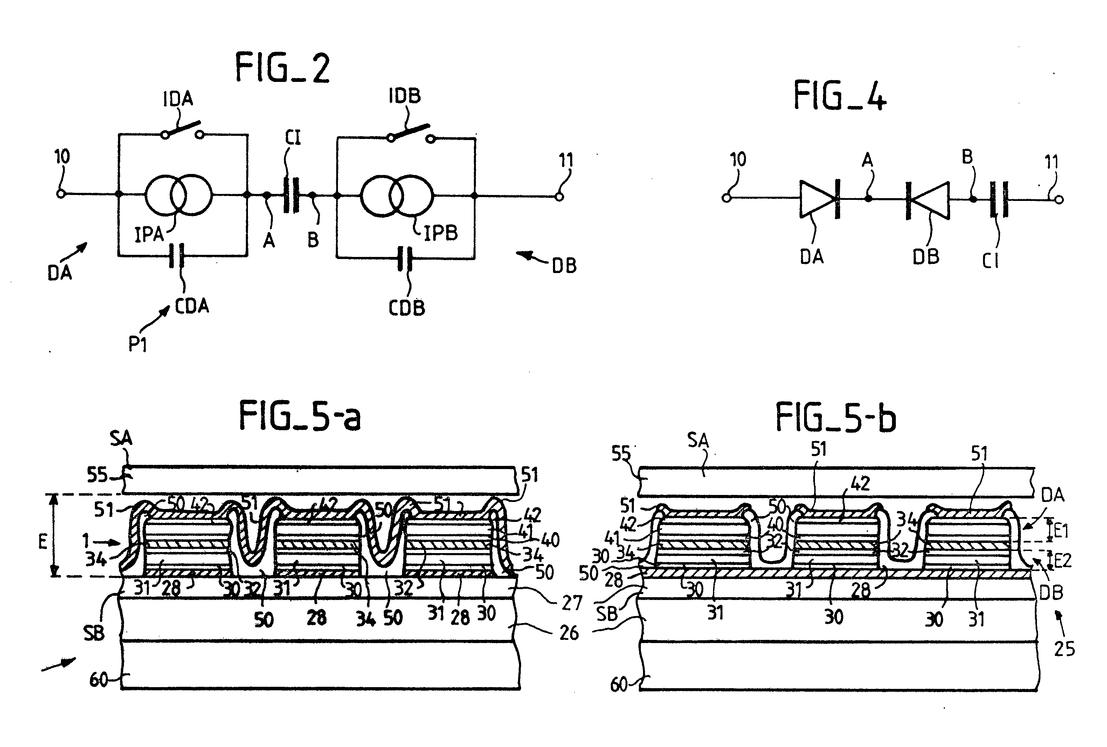

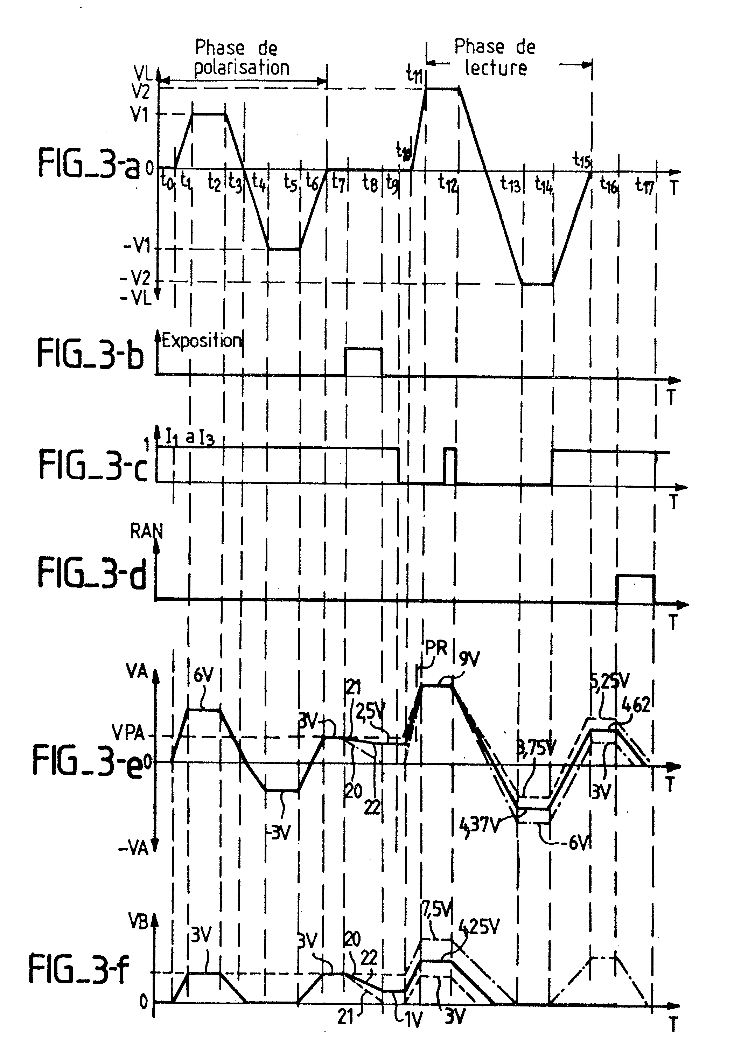

La figure 2 montre le schéma équivalent d'un point photosensible, le premier point photosensible P1 par exemple.

En supposant pour simplifier les explications, que d'une part, les photodiodes DA, DB ont un courant nul quand elles sont polarisées en inverse et qu'elles sont dans l'obscurité ; et que d'autre part, elles ont une impédance nulle quand elles sont polarisées en direct : dans ces conditions, chaque diode photosensible DA, DB peut être représentée par trois éléments paralèlles, à savoir :
- une capacité CDA, CDB, qui est la capacité présentée par la photodiode quand elle est polarisée en inverse;
- une source de courant IPA, IPB, qui a la valeur du photocourant ;
- et un interrupteur IDA, IDB qui est passant c'est-à-dire fermé quand la photodiode DA, DB est polarisée en direct et qui est bloqué c'est-à-dire ouvert quand la photodiode est polarisée en inverse.

Les figures 3a à 3f sont des diagrammes qui montrent les différents signaux appliqués ou obtenus lors d'un cycle complet de fonctionnement d'un point photosensible P1 à P9 :
- la figure 3a représente la tension de ligne VL, délivrée par le générateur d'impulsions 3, et son évolution sur un cycle ;
- la figure 3b illustre la phase d'éclairement des éléments photosensibles DA, DB, c'est-à-dire dans le cas

4

d'images radiologiques, la phase d'Exposition au rayonnement X d'un patient ;
- la figure 3c illustre le changement d'état des interrupteurs de R.A.Z. I1 à I3 montés en parallèle sur les condensateurs d'intégration CL1 à CL3
- la figure 3d représente une étape de remise à zéro générale ou remise à niveau RAN des éléments photosensibles ; - la figure 3e et la figure 3f montrent respectivement la forme de signaux VA et VB établis respectivement aux zones ou points A et B en relation avec l'application de la tension de ligne VL et de l'exposition à la lumière des éléments photosensibles DA et DB.

Les valeurs numériques indiquées aux figures 3a, 3e, et 3f sont données uniquement à titre d'exemple non limitatif, et notamment correspondent au cas particulier où les capacités équivalentes CDA et CDB présentées respectivement par les diodes photosensibles DA et DB ont une même valeur que la capacité série CI montée en série avec les photodiodes DA, DB, c'est-à-dire que CDA = CDB = CI.

A la figure 3a, à un instant t0, la tension ligne VL est à zéro et augmente pour atteindre une première valeur positive V1 de l'ordre de 6 volts à un instant t1 ; la tension ligne VL reste sensiblement stable jusqu'à un second instant t2 à partir duquel elle diminue pour passer par zéro à un instant t3 (marquant la fin d'un première impulsion positive), et croître en négatif jusqu'à un instant t4 où elle atteint une première valeur négative -V1, d'environ -9 volts ; la tension ligne VL reste sensiblement stable à la valeur -V1 jusqu'à un instant t5 où elle décroît pour revenir à zéro à un instant t6 (marquant la fin d'une première impulsion négative). Ceci constitue une phase de polarisation en inverse des photodiodes DA, DB.

Aux figures 3e et 3f, les tensions VA et VB sont à zéro avant l'instant t0 et suivent l'évolution de la tension ligne VL mais avec des valeurs différentes. En effet à l'instant t1 la première photodiode DA est passante alors que la seconde photodiode DB est bloquée ; aussi, entre les instant t0 et t1 la tension VB (montrée à la figure 3f) suit la tension VL dans le rapport CI/CI + CDB, (CDB étant la capacité équivalente de la seconde photodiode DB) de sorte qu'à l'instant t2 la tension VB a une valeur positivede l'ordre de 3V. A partir de l'instant t2 où la tension ligne VL commence à décroître pour passer de la première valeur positive V1 à zéro, la tension VA au point A varie plus lentement que la tension ligne VL de sorte que la première photodiode DA est bloquée à partir du troisième instant t2. Lorsque la tension VB au point B atteint 0 entre l'instant t3 et l'instant t4, la seconde photodiode DB devient passante et reste passante jusqu'à l'instant t5 où se situe la fin du palier négatif de la tension ligne VL ; la tension VA au point A ayant alors une valeur de sensiblement -3 volts.

A partir de l'instant t5 où la tension ligne VL décroît pour passer de la première valeur négative -V1 à la valeur zéro à l'instant t6, la seconde photodiode DB est à nouveau polarisée en inverse et constitue alors une capacité CDB, et les tensions VA et VB respectivement aux points A et B varient dans le même sens que la tension ligne VL pour atteindre chacune une tension positivede l'ordre de 3 volts, qui représente la tension de polarisation inverse VPA, VPB de ces photodiodes. Les deux photodiodes DA, DB sont ainsi finalement polarisées en inverse, et l'on note que si les valeurs V1, -V1 successivement positives et négatives de la tension ligne VL ont été bien choisies, les deux photodiodes DA, DB peuvent être polarisées en inverse à une même valeur, comme dans l'exemple décrit.

Il est à remarquer qu'à partir de l'instant t2 où la tension ligne VL décroît depuis la tension positive V1, jusqu'à l'instant t3 où la tension ligne VL passe à zéro, les deux photodiodes DA et DB sont toutes les deux polarisées en inverse, de sorte qu'il peut suffire d'une unique impulsion positive (ou négative) pour polariser en inverse à la fois les deux photodiodes DA et DB. Toutefois, il est intéressant de poursuivre la phase de polarisation par une impulsion négative afin d'obtenir, comme dans l'exemple décrit, des valeurs de tension de polarisations VPA, VPB identiques pour les deux photodiodes DA et DB.

Les deux photodiodes DA, DB étant polarisées en inverse, elles restent entre l'instant t6 et l'instant t7 dans une phase de stabilisation, puis elles sont soumises à une phase d'exposition ou d'éclairement qui résulte comme il a été précédemment mentionné,de l'exposition d'un objet ou d'un patient à des rayons X.

Cette phase d'éclairement est symbolisée à la figure 4b, entre un instant t7 et un instant t8. Durant cette période d'exposition, les photodiodes DA, DB génèrent des photocharges et qui se répartissent sur les capacités CDA, CI, CDB du point photosensible ; par suite une charge est injectée sur le conducteur de colonne, mais cette charge n'est pas prise en compte par l'amplificateur-intégrateur G1 à G3, du fait que l'interrupteur de remise à zéro I1 à I3 est fermé et court-circuite ainsi le condensateur d'intégration CL1 à CL3.

Durant la période d'exposition comprise entre l'instant t7 et l'instant t8, les tensions VA et VB au point respectivement A et B peuvent évoluer en fonction de l'intensité de cette exposition, exposition qui peut être bien entendu différente pour la première et pour la seconde photodiode DA, DB. On peut considérer deux cas extrêmes et un cas intermédiaire qui sont chacun représentés par une courbe au niveau des tensions VA et VB, c'est-à-dire au niveau des figures 3e et 3f :
- le premier cas extrême est représenté par une courbe 20 (en traits mixtes), et correspond au cas où la tension VA au point A, qui a la valeur de la tension de polarisation VPA, a été ramené à 0 volt par suite des charges engendrées durant la période d'exposition, alors que le point B n'a reçu aucune lumière de sorte que la tension VB n'a pas été modifiée et a conservé la valeur de la tension de polarisation VPB;
- une seconde courbe 21 (en tirets) correspond au second cas extrême, cas contraire à celui ci-desssus expliqué, c'est-à-dire au cas où la tension VB au point B a été ramenée à 0 volt par l'éclairement, alors que le point A n'a reçu aucune lumière :
- la troisième courbe 22 en trait plein correspond au cas intermédiaire où chacune des photodiodes DA, DB a été éclairée, de sorte que par exemple :la tension VA au point A a été modifiée par l'éclairement et a été est diminuée pour passer de 3 volts à 2,5 volts par exemple ; et que également la tension VB au point B est passée de 3 volts à une valeur plus faible à 1 volt par exemple.

Ces dernières valeurs des tensions VA et VB sont conservées depuis la fin t8 de la période d'exposition jusqu'à un instant t10 où débute une phase de lecture.

Préalablement à cette phase de lecture, c'est-à-dire à un instant t9 compris entre t8 et l'instant t10, l'interrupteur de R.A.Z. I1 à I3 change d'état et passe de l'état fermé (0) à l'état (1) ouvert, de sorte à ne plus court-circuiter les condensateurs d'intégration CL1 à CL3.

La phase de lecture débute par l'application d'une seconde impulsion positive (représentée à la figure 3a) sur le conducteur ligne, c'est-à-dire que la tension ligne VL qui est à 0 volt à l'instant t10 passe, à l'instant t11, à une tension positive ayant une seconde valeur V2 plus grande que la première valeur positive V1, 9 volts par exemple : compte tenu des conditions précédemment décrites, cette valeur de 9 volts de la tension VL est suffisante pour que cette dernière rattrape, avant d'atteindre son maximum, la valeur de la tension VA au point A qui bien entendu augmente également (de même que la tension VB au point B). Il faut en effet faire passer la première photodiode DA en direct, et ceci aussi dans le cas le plus défavorable qui est celui où la tension VA est à sa valeur positive maximum, ce cas étant représenté par la seconde courbe 21 et correspond à un éclairement nul de la première photodiode DA ; dans l'exemple non limitatif décrit, c'est à une valeur d'environ7,5 volts que se situe le point de rattrapage PR pour le cas intermédiaire représenté par la troisième courbe 22, à un instant qui précède très légèrement l'instant t11 où la tension ligne VL atteint sa seconde valeur positive V2.

Le passage en direct de la première photodiode DA modifie la répartition et les valeurs des charges accumulées sur les différents éléments du point photosensible, et provoque l'injection d'une troisième charge dite charge de lecture Q1 sur le conducteur de colonne et dans l'ampli-intégrateur qui lui est relié : cette charge de lecture Q1 est une combinaison linéaire de la première et de la seconde charge QA, QB ou première et seconde informations qui elles-mêmes sont respectivement proportionnelles à l'éclairement du premier et du second élément photosensible DA, DB.

Entre l'instant t11 et l'instant t12, la tension de ligne VL conserve sa seconde valeur positive V2 de 9 volts, ce qui est le cas également pour la tension VA au point A du fait que la première photodiode DA est alors conductrice. La tension VB au point B est stable également et, suivant l'un des cas précédemment mentionnés, elle peut avoir une valeur de 7,5 volts dans le premier cas représenté par la première courbe 20, ou une valeur de 3 volts dans le second cas représenté par la seconde courbe 21, ou encore une valeur d'environ 4,25 volts dans le troisième cas intermédiaire représenté par la troisième courbe 22.

Peu avant l'instant t12, la charge de lecture Q1 étant alors correctement acquise, l'interrupteur I1 de R.A.Z. (fig. 3c) est alors fermé (état 1) de sorte à court-circuiter et remettre à zéro le condensateur d'intégration CL1, puis l'interrupteur I1 de R.A.Z. est à nouveau remis à l'état ouvert (état 0) en vue de faire l'acquisition d'une seconde charge de lecture Q2.

A partir de l'instant t12, la tension ligne VL décroît et passe par zéro pour atteindre un deuxième niveau négatif -V2 à un instant t13, cette seconde tension négative -V2 étant de l'ordre de -13,5 volts dans l'exemple non limitatif décrit. Durant cette dernière variation de la tension ligne VL, la première photodiode VA passe en inverse, puis pour une certaine valeur de la tension ligne VL, la seconde photodiode DB passe en direct. La valeur négative de VL doit alors être telle que la seconde diode DB passe toujours en direct : le cas le plus défavorable étant celui où la tension VB au point B est maximum à l'instant t12. On retrouve ici un même principe que celui expliqué ci-dessus pour obtenir le passage en direct de la première photodiode DA (pour le passage en direct de la seconde photodiode DB, le cas le plus défavorable correspond à celui représenté par la première courbe 20, et dans les conditions qui ont été précédemment définies la tension ligne doit alors être négative avec une amplitude supérieure ou égale à 13,5 volts).

Le passage en direct de la seconde photodiode DB modifie les valeurs des charges sur les différents éléments du point photosensible et provoque l'injection de cette seconde charge de lecture Q2 dans l'ampli-intégrateur G1. Cette seconde charge de lecture Q2 est proportionnelle à la seconde charge QB ou seconde information QB engendrée au second point B par l'éclairement du second élément photosensible DB.

Entre l'instant t12 et l'instant t13, la variation de la tension ligne VL a engendré, dans un même sens, une variation des tensions VA et VB : la tension VA au point A est passée à un niveau négatif qui peut avoir, selon les trois cas précédemment mentionnés, l'une des trois valeurs représentées par les première, seconde, troisième courbes 20, 21, 22 et qui correspondent respectivement dans l'exemple non limitatif décrit à -3,75 volts, -6 volts et -4,37 volts ; dans le même temps la tension VB au point B est à 0 volt, la seconde photodiode DB étant en direct c'est-à-dire conductrice.

A la fin du palier constitué entre l'instant t13 et l'instant t14, la tension ligne VL revient à zéro à l'instant t15 et détermine une variation dans le même sens des tensions VA et VB developpées aux points A et B. Il est à noter que dans le même temps c'est-à-dire à l'instant t14, la seconde charge de lecture Q2 ayant été acquise, l'interrupteur I1 de R.A.Z. (fig.3c) est à nouveau fermé. Les points A et B ont alors une tension VA, VB positive et stable, et les photodiodes DA et DB sont toutes les deux polarisées en inverse.

La lecture des points A et B n'a pas effacée en ces points la présence des charges liées à l'éclairement des photodiodes DA, DB. Ceci apparaît clairement à la figure 3e qui montre que la tension VA au point A, a une valeur plus faible avec la troisième courbe 22 (4,62 V) qu'avec la seconde courbe 21 (5,25 V). Il est donc

6

nécessaire d'effacer ces informations avant le cycle suivant. Ceci est réalisé entre un instant t16 et un instant t17 par une impulsion de remise à niveau R.A.N., symbolisée par un créneau à la figure 4d, et qui permet de restituer aux tensions VA, VB des points A et B leur niveau d'origine, c'est-à-dire dans l'exemple non limitatif décrit le niveau 0 volt.

Dans l'exemple non limitatif de la descritpion, la remise à niveau R.A.N. est de type optique : on envoie sur les photodiodes DA, DB une quantité de lumière suffisante pour ramener les tensions VA, VB des points A et B à O Volt, comme représenté aux figures 4e et 4f à partir de l'instant t16.

Il est alors possible de commencer le cycle suivant.

A partir descharges de lecture Q1, O2, il est possible de calculer les informations QA et QB à l'aide des deux relations suivantes :

$$Q1 = QA \cdot \alpha + QB \cdot \frac{CI\ (1-\gamma)\ -\ CDB^{\gamma}}{CI\ +\ CDB} \quad ; (1)$$

$$Q2 = -\ QB \quad \cdot \quad \frac{CDA \cdot CI}{(CI\ +\ CDA)\ (CI\ +\ CDB)} \quad ; (2)$$

où QA et QB correspondent respectivement à la première et la seconde informations ; CI est la capacité qui, dans un point photosensible, est en série avec les deux éléments photosensibles DA et DB ; CDA est la capacité équivalente du premier élément photosensible DA ; CDB est la capacité équivalente du second élément photosensible DB ; $\alpha$ et $\gamma$ sont connus respectivement par les troisième et quatrième relations qui suivent :

$$(3)\ \alpha\quad =\quad \frac{\dfrac{CI \cdot CDB}{CI\ +\ CDB}}{\dfrac{CI \cdot CDB}{CI\ +\ CDB}\ +\ CDA}$$

$$(4)\ \gamma\quad =\quad \frac{\dfrac{CI \cdot CDA}{CI\ +\ CDA}}{\dfrac{CI\ +\ CDA}{CI\ +\ CDA}\ +\ CDB}$$

Ainsi par exemple :
- si CDA = CI = CDB :
Q1 = 1/3 QA + 1/6 QB, et Q2 = - 1/4 QB ;
- si CDA = CI = 2 CDB :
Q1 = 1/4 QA + 1/6QB, et Q2 = - 1/3 QB ;
- si CI = 2 CDA = 2CDB :
Q1 = 2/5 QA + 4/15 QB, et Q2= 2/9 QB.

Cette description du fonctionnement d'un élément photosensible P1 isolé peut s'appliquer à l'ensemble des points photosensibles P1 à P9, c'est-à-dire à l'ensemble de la matrice photosensible 1 représentée en figure 1. Dans l'exemple non limitatif de la figure 1, la matrice comporte un nombre de conducteurs de ligne et de colonne L1 à L3 et C1 à C3 volontairement limité pour plus de clarté de la description, et par suite cette matrice comporte un faible nombre de points photosensibles, mais bien entendu l'invention peut s'appliquer à des matrices photosensibles beaucoup plus importantes, ayant par exemple plusieurs millions de points photosensibles pour former une image de 40 cms x 40 cms. Par rapport à des matrices photosensibles classiques, la matrice photosensible 1 conforme à l'invention présente comme différence, notamment, que chaque point photosensible de P1 à P9 peut stocker deux informations différentes, de sorte que la matrice photosensible 1 de l'invention permet de faire l'acquisition simultanée des informations relatives à deux images différentes.

EP 0 332 486 A1

Le fonctionnement global de la matrice photosensible 1 est le suivant et se déduit des explications ci-dessus données:

- 1 - le générateur d'impulsion 3 (représenté à la figure 1) envoie sur tous les conducteurs lignes L1 à L3, simultanément ou avec un décalage, une impulsion positive puis une impulsion négative (représentées figure 3a entre l'instant t0 et l'instant t6 ; la durée pour ces deux impulsions pouvant être comprises entre 1 et 5 ms). Toutes les photodiodes DA et DB se trouvent alors polarisées en inverse, et tous les interrupteurs R.A.Z. I1 à I3 sont fermés.

- 2 - ensuite s'écoule un temps d'attente (de quelques millisecondes).

- 3 - puis entre l'instant t7 et l'instant t8 survient un flash de rayonnement X qui, par suite d'une conversion en longueur d'onde à l'aide de deux scintillateurs (montrés à la figure 5), détermine l'éclairement de tous les points photosensibles de la matrice, pendant un temps compris par exemple entre 10 ms et 100 ms.

- 4 - le générateur d'impulsions 3 délivre alors une seconde impulsion positive , et une seconde impulsion négative (représentées sur la figure 3a entre l'instant t10 et l'instant t15). Les interrupteurs de R.A.Z. I1 à I3 étant ouverts, on récupère des charges de lecture Q1, Q2 qui, sous forme de tension, sont présentes en sortie OF1 à OF3 des amplificateurs G1 à G3 ; ces charges de lecture Q1, Q2 permettant de connaître les informations QA, QB stockées aux points A et B. Il est à noter que si les interrupteurs I1 à I3 sont actionnés selon l'exemple représenté à la figure 3c, on obtient d'abord Q1, puis ensuite Q2 ; mais on peut également, si on laisse les interrupteurs R.A.Z. I1 à I3 toujours ouverts entre l'instant t9 et l'instant t14, obtenir d'abord Q1, puis ensuite Q1 + Q2.         .

Les informations disponibles en sortie OF1 à OF3 des amplificateurs G1, G3 sont chargées par le dispositif d'acquisition 6 puis envoyées à un calculateur (non représenté, de type classique) qui calcule les valeurs des première et seconde charges ou informations QA et QB à partir des charges de lecture Q1 et Q2, les valeurs de QA et QB étant ensuite stockées. Durant la présente phase 4 des opérations, les autres conducteurs ligne L2, L3 de la matrice 1 sont maintenus à zéro, la durée de cette phase étant typiquement de l'ordre d'1 ms.

- 5 - la phase 4 ci-dessus est répétée ligne après ligne pour tous les conducteurs ligne du panneau ou matrice photosensible 1. On obtient ainsi dans le calculateur, les deux images qui étaient recherchées.

- 6 - il est ensuite effectué une remise à niveau R.A.N. générale, c'est-à-dire commune à tous les points photosensibles de la matrice 1, et dont la durée est par exemple de l'ordre de 10 ms à 100 ms (cette remise à niveau générale étant symbolisée à la figure 3d entre l'instant t16 et l'instant t17).

Les explications données ci-dessus sur le fonctionnement d'une matrice photosensible 1 conforme à l'invention sont valables non seulement pour un ou des points photosensibles tels que représentés sur la figure 1, mais sont valables également avec une disposition relative différente entre les deux éléments photosenbles DA, DB et la capacité en série CI, comme il est représenté à la figure 4.

La figure 4 montre un point photosensible, le premier point photosensible P1 par exemple, selon une forme qui diffère de celle représentée à la figure 1 en ce que la capacité série CI n'est plus située entre les deux photodiodes DA, DB, mais que le montage série est constitué par une première et une seconde photodiodes DA, DB suivies de la capacité série CI (ou l'inverse bien entendu). L'important étant que ces trois éléments, à savoir les deux photodiodes DA, DB et la capacité série CI soient montés en série, et que les deux photodiodes DA, DB soient disposées tête-bêche. Dans cette optique il est à noter également que les photodiodes DA, DB peuvent être remplacées par des phototransistors, à condition que ces derniers soient bien choisis, c'est-à-dire constitués par exemple par des phototransistors de type NIPIN ou PINIP.

Les figures 5a et 5b sont des coupes latérales selon deux directions orthogonales qui montrent, à titre d'exemple non limitatif et de manière schématique, une forme de réalisation préférée d'un détecteur d'images 25 radiologique à double énergie, comprenant une matrice photosensible telle que précédemment décrite.

Le détecteur d'images 25 comporte un support ou substrat 26 en verre par exemple. Une couche scintillatrice 27 formée d'une substance scintillatrice qui est déposée sur le substrat 26.

La substance scintillatrice est choisie en fonction de sa sensibilité maximale dans une certaine gamme d'énergie du rayonnement X incident. Par exemple l'oxysulfure de gadolinium dopé au terbium, est connu pour avoir une sensibilité optimale pour des rayons X dont l'énergie est de l'ordre 50 KeV, et pour émettre en réponse une lumière verte de longueur d'onde 0,54 micron. Ainsi par exemple la couche scintillatrice 27 peut être constituée par une poudre d'oxysulfure de gadolinium noyée dans une résine thermodurcissable, de manière à constituer une feuille ; cette feuille étant ensuite collée sur le substrat 26. La couche scintillatrice 27 a une épaisseur qui est choisie pour optimiser l'efficacité de production de photon sans trop perdre sur la résolution. Cette épaisseur peut aller de quelques dizaines à quelques centaines de micromètres pour les applications d'imagerie radiologique.

Une mince couche conductrice 28 de matériau conducteur, transparent ou partiellement transparent à la lumière émise par la couche scintillatrice 27, recouvre cette couche scintillatrice 27, soit directement, soit par l'intermédiaire par exemple d'une couche isolante intermédiaire (non représentée) qui permet notamment de planariser la surface supérieure de la couche scintillatrice 27 et de constituer une barrière à une diffusion d'impuretés. La mince couche conductrice 28 peut être en oxyde d'indium-étain par exemple, et elle est gravée de sorte à constituer les conducteurs de colonne tel que les conducteurs de colonne C1, C2, C3.

La couche conductrice 28 est à son tour recouverte par un empilement de plusieurs couches 30, 31, 32 qui après gravure constituent les secondes photodiodes DB précédemment décrites. Dans l'exemple non limitatif décrit, les photodiodes DB sont du type PIN, c'est-à-dire que sur la couche conductrice 28 (destinée à former les conducteurs de colonne), on trouve d'abord une couche 30 de silicium amorphe hydrogéné, par décomposition chimique en phase gazeuse (CVD) par exemple ; le silicium amorphe hydrogéné de cette couche 30 étant dopé avec une impureté de type P, du bore par exemple.

On trouve ensuite, au-dessus de la couche 30 de silicium dopé, la couche 31 en silicium amorphe hydrogéné intrinsèque.

Ensuite est déposée sur la couche de silicium intrinsèque 31, une couche de silicium amorphe hydrogéné 32 dopé avec une impureté de type N, du phosphore par exemple. Au-dessus des trois couches 30, 31, 32 formant les secondes photodiodes DB, on trouve une couche isolante 34 qui forme le diélectrique des capacités CI précédemment montrées et montées en série entre les photodiodes DA, DB. Dans l'exemple non limitatif décrit la couche 34 formant le diélectrique des capacités CI est constituée en nitrure de silicium.

Au-dessus de la couche isolante 34 on trouve un second empilement de trois couches 40, 41, 42 qui servent à constituer les premières photodiodes DA ; de sorte qu'au dessus de la couche 34, on trouve successivement une couche de silicium amorphe hydrogéné 40 dopé avec une impureté de type N, puis une couche de silicium amorphe hydrogéné intrinsèque 41, puis une couche de silicium amorphe hydrogéné 42 dopé avec une impureté de type P. Les trois couches 40, 41, 42 destinées ensemble à constituer les premières photodiodes DA, et la couche 34 isolante (diélectrique) sont gravées comme les trois couches 30, 31, 32, qui forment la seconde photodiode DB, c'est-à-dire gravées selon un motif d'ilots placés à chacun des points de croisement des conducteurs de colonne et des conducteurs ligne de la matrice. Les capacités CI étant constituées par la couche isolante 34 située entre deux régions de type N qui sont formées par la couche 32 de la seconde photodiode DB, et par la couche 40 de la première photodiode DA.

Il est à noter que le procédé de réalisation peut également consister à déposer, successivement, toutes les couches 30, 31, 32, 34, 40, 41, 42 qui constituent les deux photodiodes DA, DB avec, entre ces dernières, le diélectrique de la capacité CI, puis à graver ensuite ces couches en une même opération.

Cet ensemble est couvert d'une nouvelle couche isolante 50, qui par exemple peut être en un même matériau que la couche isolante 34 qui forme le diélectrique des capacités CI.

Des ouvertures sont réalisées dans cette dernière couohe isolante 50 au-dessus des premières photodiodes DA de sorte à permettre d'établir leur contact avec une couche conductrice supérieure 51 que l'on grave pour définir les conducteurs de ligne L1 à L3 de la matrice. De même que la couche conductrice inférieure 28 servant à réaliser les conducteurs de colonne, la couche conductrice supérieure 51 est transparente et elle est réalisée par exemple en oxyde d'indium-étain.

Enfin, à l'opposé du substrat 26 une seconde couche scintillatrice 55 termine la structure, et recouvre la couche supérieure conductrice 51 sur laquelle elle est collée ou pressé avec un lien transparent à la lumière (non représenté).

La substance scintillatrice qui forme la seconde couche scintillatrice 55 est choisie en fonction de la gamme d'énergie du rayonnement X pour laquelle elle présente une sensibilité maximale, cette sensibilité maximale étant présentée bien entendu pour une gamme d'énergie du rayonnement X différente de celle de la première couche scintillatrice 27. Ainsi par exemple dans le cas de la seconde couche scintillatrice 55, celle-ci peut être constituée par de l'oxyde d'yttrium de sorte à présenter une sensibilité optimale pour des rayons X de 20 KeV ; l'oxyde d'yttrium de la seconde couche scintillatrice 55 pouvant être dopé par exemple au terbium.

Dans cette structure, on remarque que les points photosensibles de la matrice sont réalisés par un empilement de couches dans le sens d'une épaisseur E de la matrice 1, à savoir trois couches 30, 31, 32 pour les secondes photodiodes DA, puis une couche 34 isolante pour former les capacités CI, puis trois couches 40, 41, 42 pour constituer les premières photodiodes DA, toutes ces couches étant disposées entre des couches conductrices 28, 51 formant respectivement les conducteurs de colonne et les conducteurs de ligne. L'un des avantages d'une telle structure est de minimiser l'encombrement latéral de chaque point photosensible pour chacun desquels deux photodiodes DA, DB sont ainsi superposées. Cette structure est d'autant plus avantageuse que chaque point doit être sensible à des rayonnements (de lumière) d'origine différente, ce qui est obtenu en plaçant la structure de matrice qui vient d'être décrite en sandwich entre la première et la seconde couches scintillatrices 28,55.

En supposant que le rayonnement X (non représenté) arrive du côté de la couche scintillatrice 55 disposée à l'opposé du substrat 26 (de sorte à éviter l'absorption du rayonnement X par le substrat 26), cette couche scintillatrice étant appelée dans la suite de la description première couche scintillatrice SA compte tenu du sens de propagation du rayonnement X. Le rayonnement X traverse d'abord la première couche scintillatrice SA et les premières photodiodes DA, puis traverse ensuite traverse les secondes photodiodes DB, et l'autre couche scintillatrice 27 ou seconde couche scintillatrice SB située entre le substrat 26 et les secondes photodiodes DB. Il est à remarquer que le rayonnement x n'est absorbé de façon notable que par les scintillateurs SA, SB, compte-tenu de la très faible épaisseur des couches semi-conductrices, dont les plus épaisses, les couches 31, 41, ont une épaisseur de l'ordre de 1 micromètre.

Le premier scintillateur SA absorbe principalement des rayons X ayant une première gamme d'énergie (autour de 20 KeV par exemple), et il convertit les rayons X qu'il absorbe en un rayonnement détectable par le silicium amorphe. Le second scintillateur B absorbe principalement des rayons X dont l'énergie correspond à sa sensibilité maximum qui se situe à des énergies (50 KeV par exemple) différentes que dans le cas du premier scintillateur SA, les rayons X absorbés étant oonvertis en un rayonnement détectable par le silicium amorphe. Les premières photodiodes DA situées à proximité du premier scintillateur SA captent préférentiellement la lumière émise par le premier scintillateur SA, et les secondes photodiodes DB qui sont situées à proximité du second scintillateur SB, captent préférentiellement la lumière émise par ce second scintillateur SB.

En effet, dans un matériau photosensible, le silicium amorphe par exemple, un rayonnement et notamment la lumière émise par les couches scintillatrices SA, SB, est absorbée ou atténuée dans la matière photosensible de manière telle que l'énergie cédé à cette matière décroît exponentiellement avec la longueur de matière traversée. Il en résulte que, si les premières et les secondes diodes DA, DB et ont des épaisseurs respectivement E1, E2 comparables, la lumière émise par la première couche scintillatrice SA est absobée et donc détectée essentiellement par les premières photodiodes DA, et que la lumière émise par la seconde couche scintillatrice SB est absorbée et détectée essentiellement par les secondes photodiodes DB. Il est à remarquer en outre que si les épaisseurs E1, E2 des photodiodes DA, DB sont suffisantes pour absorber totalement le rayonnement ou lumière émise par la couche scintillatrice qui est la plus proche, on obtient une séparation totale entre les deux informations fournies par les deux couches scintillatrices SA et SB, et détectées respectivement par les première et seconde photodiodes DA et DB. On peut indiquer à titre d'exemple non limitatif, que des résultats satisfaisants ont été obtenus pour des épaisseurs E1, E2 des photodiodes DA, DB de l'ordre de 1 micron (nous rappelons que l'épaisseur E1, E2 est donnée essentiellement par l'épaisseur de la zone intrinsèque).

Une telle disposition est particulièrement avantageuse, en ce qu'elle permet de réaliser la superposition de couches ci-dessus décrites par des couches transparentes à la lumière, de sorte que la remise à niveau R.A.N. précédemment mentionnée peut facilement être effectuée simultanément pour les deux photodiodes DA, DB d'un même point photosensible, à partir d'un flash de lumière émis par une unique source de lumière ; ce flash de lumière pouvant servir à une remise à niveau générale de tous les points photosensibles de la matrice.

Dans ce cas, une source 60 de lumière ou source de remise à niveaudestinée à une remise à niveau générale peut être plaquée contre le substrat 26, par exemple à l'opposé du second scintillateur SB. Cette source 60 de lumière peut être constituée par des moyens en eux-mêmes connus, par exemple par une lumiplaque, ou par un réseau de diodes électro-luminescentes, ou par des tubes à éclat, etc....

Le second scintillateur SB doit être transparent ou semi transparent à la lumière ; ceci s'obtient notamment quand le scintillateur SB est suffisamment mince (avec une épaisseur de l'ordre de 300 micromètres par exemple).

Si la source de lumière 60 est appliquée sur le substrat 26, à l'opposé du second scintillateur SB, le substrat 26 doit lui-même alors être transparent. Un substrat classique en verre convient parfaitement. La source de lumière 60 peut alors être constituée par un réseau de diodes électro-luminescentes (non représentées), montée de manière à former un panneau, comme dans l'exemple décrit dans une demande de brevet français N° 86 06334.

Selon une autre caractéristique de l'invention, en vue de favoriser la remise à niveau générale à l'aide d'une unique source de lumière 60, cette dernière émet une lumière rouge, c'est-à-dire une lumière de longueur d'onde plus grande que la lumière émise par les scintillateurs SA, SB ; ceci tend à diminuer l'absorption de la lumière servant à la remise à niveau générale par rapport à l'absorption de la lumière émise par les scintillateurs SA, SB.

Il est possible également de réaliser une séparation matérielle entre les premières et les secondes photodiodes DA, DB, par exemple en rendant opaque la couche isolante 34 qui constitue le diélectrique des capacités CI. Bien entendu, dans ce cas la remise à niveau R.A.N. peut exiger une autre source de lumière (non représentée) située du côté des premières photodiodes DA.

Dans la description, on a suposé que l'invention s'appliquait à des détecteurs de rayons X, notamment en radiologie médicale, mais elle s'applique aussi à des détecteurs d'autres radiations, pourvu qu'on dispose de substances scintillatrices effectuant les conversions de longueur d'ondes désirées.

**Revendications**

1. Matrice d'éléments photosensibles comportant, un réseau de conducteurs ligne (L1 à L3) et un réseau de conducteurs colonne (F1 à F3), un réseau de points photosensibles (P1 à P9),caractérisée en ce que chaque point photosensible (P1 à P9) comporte, entre un conducteur ligne (L1) et un conducteur colonne (F1), deux éléments photosensibles (DA, DB) et une capacité (CI), les deux éléments photosensibles (DA, DB) et la capacité (CI) étant montés en série, les deux éléments photosensibles étant montés avec des sens de conduction opposés l'un par rapport à l'autre.

2. Matrice selon la revendication 1, caractérisée en ce que les éléments photosensibles (DA, DB) sont des photodiodes.

3. Matrice selon la revendication 1, caractérisée en ce que les éléments photosensibles (DA, DB) sont des phototransistors du type NIPIN ou PINIP.

4. Matrice selon l'une des revendications précédentes, caractérisée en ce que la capacité (CI) est placée en série entre les éléments photosensibles (DA, DB).

5. Matrice selon l'une des revendications précédentes , dans laquelle chaque point photosensible (P1 à P9) comporte une première et une seconde extrémités (10, 11) reliées respectivement à un conducteur ligne (L1 à L3) et à un conducteur colonne (F1 à F3), caractérisée en ce qu'un point photosensible (P1 à P9) comporte en outre une première et une seconde zones à potentiel flottant (A, B) où sont stockées respectivement une première et une seconde informations (QA, QB) produites respectivement par l'éclairement du premier et du second éléments photosensibles (DA, DB).

6. Matrice selon la revendication 5, caractérisée en ce que les conducteurs ligne (L1 à L3) et les conducteurs colonne (F1 à F3) sont reliés à des moyens (3, G1, G2,G3) pour polariser en inverse les éléments photosensibles (DA, DB), avant leur éclairement, puis pour les polariser ensuite en direct afin d'obtenir deux charges de lectures (Q1, Q2) liées aux informations (QA, QB) stockées dans les zones (A,B) à potentiel flottant.

7. Matrice selon la revendication 6, caractérisée en ce que les première et seconde information (QA, QB) sont liées respectivement aux deux charges de lecture (Q1, Q2) par les deux relations suivantes : <

$$Q1 = QA\,\alpha + QB \cdot \frac{CI\,(1-\gamma) - CDB^{\gamma}}{CI + CDB} \quad ; (1)$$

$$Q2 = -QB \cdot \frac{CDA.\ CI}{(CI + CDA)\ (CI + CDB)} \quad ; (2)$$

où QA et QB correspondent respectivement à la première et la seconde informations ; CI est la capacité qui, dans un point photosensible, est en série avec les deux éléments photosensibles DA et DB ; CDA est la capacité équivalente du premier élément photosensible DA ; CDB est la capacité équivalent du second élément photosensible DB ; $\alpha$ et $\gamma$ sont connus respectivement par les troisième et quatrième relations qui suivent :

$$(3)\quad \alpha = \frac{\dfrac{CI.CDB}{CI + CDB}}{\dfrac{CI.CDB}{CI + CDB} + CDA}$$

$$(4)\quad \gamma = \frac{\dfrac{CI.CDA}{CI + CDA}}{\dfrac{CI + CDA}{CI + CDA} + CDB}$$

8. Matrice selon la revendication 6, caractérisée en ce que les moyens pour polariser les éléments photosensibles (DA, DB) comportent un générateur d'impulsions (3).

9. Matrice selon la revendication 8, caractérisée en ce que le générateur d'impulsions (3) délivre des groupes de deux impulsions de polarités opposées.

10. Matrice photosensible selon l'une des revendications précédentes, caractérisée en ce que pour chaque point photosensible (P1 à P9), les deux éléments photosensibles et la capacité (DA, DB, CI) sont constitués par des couches (30, 31, 32, 34, 40, 41, 42) qui sont toutes superposées.

11. Dispositif de conversion d'images en signaux électriques, comportant une première et une seconde substances scintillatrices (27,55) sensibles à des énergies différentes d'un rayonnement incident et qui émettent une lumière visible ou proche du visible en réponse au rayonnement incident, caractérisé en ce qu'il comporte en outre une matrice d'éléments photosensibles (1) selon l'une des revendications 1 à 10.

12. Dispositif selon la revendication 11, caractérisé en ce que les deux substances scintillatrices (27,55) constituent une première et une seconde couches scintillatrices (SA, SB) entre lesquelles est située la matrice photosensible (1), de sorte à réaliser une structure en sandwich.

13. Dispositif selon l'une des revendications 11 ou 12, caractérisé en ce que le rayonnement incident est un rayonnement X.

14. dispositif selon la revendication 12, caractérisé en ce que la matrice photosensible (1) comporte une pluralité de points photosensibles (P1 à P9) comportant chacun un premier et un second éléments photosensibles et une capacité (DA, DB, CI) montés en série, les deux éléments photosensibles et la capacité étant constituées de couches (30, 31, 32, 34, 40, 41, 42) superposées dans le sens d'une épaisseur (E) de la matrice comprise entre les deux couches scintillatrices (SA, SB).

15. Dispositif selon la revendication 14, caractérisé en ce que la matrice (1), dans le sens de son épaisseur (E), est transparente à la lumière visible où proche du visible.

16. dispositif selon la revendication 15, caractérisé en ce qu'il comporte en outre une source de lumière (60) servant à réaliser une remise à niveau (R.A.N.) des éléments photosensibles (DA, DB).

17. Dispositif selon la revendication 16, caractérisé en ce que la lumière émise par la source de lumière (60) a une longueur d'onde plus grande que la lumière émise par les substances scintillatrices (27, 55).

18. Dispositif selon l'une quelconque des revendications 14 à 17, caractérisé en ce que les éléments photosensibles (DA, DB) sont des photodiodes.

19. Dispositif selon l'une quelconque des revendications 14 à 17, caractérisé en ce que les éléments photosensibles (DA, DB) sont des phototransistors du type NIPIN ou PINIP.

20. Dispositif selon l'une des revendications 11 à 19, caractérisé en ce que la matrice photosensible (1) est formée sur un substrat (26), et en ce qu'une couche scintillatrice (SB) est déposée sur le substrat (25) et intercalée entre le substrat (26) et la matrice (1) photosensible.

21. Dispositif selon la revendication 20, caractérisé en ce que le substrat (26) est transparent, et en ce que la source de lumière (60) est située sur une face du substrat opposée à la matrice photosenible.

22. Dispositif selon l'une des revendications 15 à 21, caractérisé en ce que les premier et second éléments photosensibles (DA, DB) ont des épaisseurs (E2, E3) sensiblement égales.

# FIG_1

## FIG_2

IDA

CI

IDB

10    DA    IPA    A    B    IPB    DB    11

P1    CDA    CDB

## FIG_4

10    A    B    11

DA    DB    CI

## FIG_5-a

SA

55    51

51    50 42    51    42    50    51    42

E    1    41    40

34    34

50

31 28    30 32 31    30    32    31 28 30

27

50    28    34 50    26

SB

60

## FIG_5-b

55    SA    51    51

51    50    42    DA

42    40    34    E1

41    32    32

30    34    E2

50    28    DB

SB    30    31    28    30    30    31

25

60

EP 0 332 486 A1

FIG_3-a

FIG_3-b

FIG_3-c

FIG_3-d

FIG_3-e

FIG_3-f

# DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| A | EP-A-0 223 545  (PICKER INTERNATIONAL)<br>* Page 17, ligne 7 - page 18, ligne 17; figures 1-2a *<br>--- | 1,11 | H 04 N    3/15<br>H 05 G    1/60<br>H 04 N    5/32 |
| A | EP-A-0 163 956  (ENERGY CONVERSION DEVICES)<br>* Page 28, ligne 21 - page 29, ligne 27; figure 10 *<br>--- | 1 | |
| A | US-A-4 581 625  (GAY et al.)<br>* Colonne 3, lignes 27-57; figure 1 *<br>----- | 1,10-14 | |

DOMAINES TECHNIQUES RECHERCHES (Int. Cl.4)

H 04 N
H 01 L

Le présent rapport a été établi pour toutes les revendications

| Lieu de la recherche | Date d'achèvement de la recherche | Examinateur |
|---|---|---|
| LA HAYE | 14-06-1989 | BEQUET T.P. |